# EUROPEAN PATENT APPLICATION

(11) **EP 1 528 460 A1**
(43) Date of publication of application: **04.05.2005**
(21) Application number: 03025030.2
(22) Date of filing: 30.10.2003
(51) Int. Cl.: G06F 3/033

(54) **Method and system for generating cursor control data in relation to a users input action**

(71) Applicant: GIRAUD, Pierre, 81667 München (DE)
(72) Inventor: GIRAUD, Pierre, 81667 München (DE)

(57) **Abstract**

The present invention is directed to a method for generating control data in accordance with a users input action, in particular pointing or position control action applied to an input device such as a mouse or touch pad.

It is an object of the present invention to provide a method as well as a system for carrying out said method which shall allow the generation of control data in accordance with an operation motion of a user in a manner enabling a quick and precise pointing operation, in particular cursor control.

According to a first aspect of the present invention, this object is performed by a method for generating control data appropriate for positioning a cursor on a display surface such as a computer screen, wherein said control data are generated in a manner allowing to move said cursor on the basis of a speed vector approach, wherein a travelling speed vector of said cursor is determined in relation to a position selection determined by a control movement of a user within a control area.

On the basis of this method it is possible to precisely control the movement of a cursor in a manner, where wide range movements of the cursor may be achieved by a merely small control movement towards a particular position within the control area, determining the cursors travelling speed and travelling orientation.

## Description

The present invention is directed to a method for generating control data in accordance with a users input action, in particular pointing or position control action applied to an input device such as a mouse or touch pad. The present invention is also directed to a system as well as components of such a system, for converting a users control movement into a control data sequence for controlling the movement of a cursor on a display such as a computer screen for example.

Conventional systems for generating such control data are known as mouse- or touch-pad interfaces - or are generally addressed as *pointing devices.* Those pointing devices may be used to convert a manual control movement applied by a users hand to said pointing device such as said mouse, or a touch pad into a sequence of control data for moving a cursor within an image displayed on a computer screen. The detection of the control motion of such a mouse device or of the finger tip, may be effected by various approaches including electronic movement tracking systems, touch-pads, distance measuring mechanisms, constructions for detection of relative movement, acceleration or the like, or optical systems.

Usually displacement of those mouse devices, or the relative movement of a finger tip along a touch-pad surface is used to generate a sequence of control data to enable an input-response to an 2D/3D image displayed on a screen. Said control data may be generated in a manner where the movement of a cursor or other pointing symbol on said screen is effected in a corresponding relative orientation and substantially proportional to the users control movement. Usually the control movement of the user is magnified so as to enable a cursor movement over the whole computer screen by control movements within in area smaller than said computer screen. In case of a Note-book computer for example a whole-screen movement may be controlled within a touch-pad area of less than 50 cm². Basically, a high magnification factor helps to increase operational speed, however the pointing precision is reduced. In view of the limitations given by the touch pad area or the mouse running area it is basically difficult to realise magnification factors smaller than 1,5. With increase of screen resolution and the number of program-features provided by software determined user surfaces, a quick and precise pointing or cursor control concept appears to be desirable.

In consideration of the above, it is an object of the present invention to provide a method as well as a system for carrying out said method which shall allow the generation of control data in accordance with an operation motion of a user in a manner enabling a quick and precise pointing operation, in particular cursor control.

According to a first aspect of the present invention, this object is performed by a method for generating control data appropriate for positioning a cursor on a display surface such as a computer screen, wherein said control data are generated in a manner allowing to move said cursor on the basis of a speed vector approach, wherein a travelling speed vector of said cursor is determined in relation to a position selection determined by a control movement of a user within a control area.

More detailed, the present invention provides a method for generating control data appropriate for moving and positioning a cursor within a display area such as a computer screen or projection surface in response to a users control action, wherein said control data are generated so as to move and position said cursor in accordance with a travelling vector, wherein speed and orientation of said travelling vector are determined in relation to a position selected within a control area, while said selection of said position being achieved by said control action of the user, and wherein further said control area performs as a selection system for providing speed and/or direction parameters for determining said travelling vector, in association to selectable positions within said control area.

On the basis of this method it is possible to precisely control the movement of a cursor in a manner, where wide range movements of the cursor may be achieved by a merely small control movement towards a particular position within the control area, determining the cursors travelling speed and travelling orientation.

According to a further aspect of the invention the above object is performed by a method for generation of control data for controlling a cursor via a computing system in accordance with an operators control movement in a manner wherein said control data are generated in accordance with a first conversion function which allows controlling said cursor substantially proportional to said operators control motion as long as said control motion complies with a first conversion criteria, and said control data are generated in accordance with a second conversion function which allows to control the movement of said cursor in connection with direction/movement-speed process when said control motion complies with a second conversion criteria.

On the basis of this method it is possible to precisely control the movement of a cursor in a manner, where relatively small movements (narrow range movements) are controlled precise and stable in close proportion to an operators control movement, while wide range movements of the cursor are carried out by a merely small control movement determining the cursors travelling speed and travelling orientation.

Said first conversion criteria may be determined to consider as to whether the control movement is inputted within a given first-mode-area. This first-mode area preferably corresponds to the central area within a touch-pad, or mouse movement area.

It is also possible, to dynamically adapt the first mode criteria in particular to determine shape and size and position of said first mode area. For example, the extension and/or position of said first mode area may be determined by a switching operation such as a mouse click or a finger-tip exceeding a given pressure.

Said first conversion criteria may be also determined as to whether the control movement does not exceed a given range around a starting point or a reference point or whether the control movement is inputted under a particular switching state.

Preferably said method according to the present invention is carried out by a cursor control subroutine implemented in, or added/accessible to the active operating program of a users computer. It is possible to provide an open access to this cursor control subroutine or subprogram in a manner where selected parameters and operational characteristics may be determined in accordance with the users preferences. In this respect there is preferably a device options subroutine which allows to adapt and configure said method on the basis of a menu surface as it is known for hardware adaptation purposes. It is also possible to incorporate a calculation unit, configured so as to perform the method according to the present invention into a mouse device, while the data format generated by this calculation unit corresponds to a standard data format, wherein the data in standard format are calculated on the basis of the method according to the present invention. This will allow a plug and play incorporation of a mouse system according to the present invention into a computer system.

It is also possible, to realize the particular configuration of a computer system to carry out the method according to the present invention on the basis of a software code provided on a data carrier, or held available for download. On the basis of this approach, it will become possible to reconfigure available computer systems so as to perform the particular cursor control method according to the present invention.

Said second conversion criteria preferably corresponds to the inversion of said first conversion criteria. In case said first conversion criteria is the presence of the mouse or fingertip within the first mode area, the second conversion criteria will be fulfilled if said mouse or fingertip is outside said first mode area.

It is possible, to calculate the cursor control data for the first control mode (proportional mode) and the second control mode (speed+orientation mode) in parallel but to use only those control data which correspond to the mode allowed in view of the present input situation.

In particular in connection with the approach set forth in the paragraph above it is possible to determine said second conversion criteria as a fingertip pressure in relation to a threshold value. Thus said second control data generation mode may become relevant for controlling the cursors movement, if a finger-tip pressure exceeds a given threshold value. Said threshold value may be determined by a user in the framework of setting the device parameters upon installation of a mouse driver.

According to a particular aspect of the present invention, the direction/movement-speed process is determined such that the direction of the movement is determined so as to substantially conform to the direction of a vector determined by the present input position in respect to a centre of orientation.

The speed of the movement is preferably determined so that the movement speed of the cursor corresponds to the distance from said centre of orientation.

Alternatively the speed of the movement of the cursor may be determined in relation to the distance from a borderline around said first-mode-area.

It is possible, to consider the crossing speed and/or crossing direction of the input point running during the users control action over said borderline. The crossing speed may be used as the initial cursor speed in the speed control area.

Basically, this invention associates to a delimited surface, area (or a delimited space in case of 3D application) a preferably continuous speed vector field, thus associating to the position of the said input point, for example a finger tip a determined speed vector.

According to a further aspect of the present invention, said method is preferably determined so that the direction/movement-speed process allows a change of speed and orientation of the propagation of the cursor in a manner where a small change in the input position implies a small a change in the speed and orientation of the propagation of the cursor.

In respect to hardware components, the object underlying the present invention as set forth in the introductory portion of this description is performed by an Input system for enabling the generation of path control data, said system comprising
- detection means for detecting a users control movement,
- calculation means for calculating said control data, said calculation means being configured so as to perform the method as explained above.

In particular, said calculation means may be configured so as to generate said path control data in accordance with a first conversion function which allows controlling said cursor substantially proportional to said operators control motion as long as said control motion complies with a first conversion criteria, and for calculation of said path control data in accordance with a second conversion function which allows to control the movement of said cursor in connection with a direction/movement-speed procedure when said control motion complies with a second conversion criteria.

Said detection means are preferably construed as a mouse device or as a touch-pad device.

Further details of the present invention will become evident from the explanations given below in connection with the accompanying drawings in which:-
- **Figure 1**: shows an example of a continuous field of speed vector.
- **Figure 2a**: shows a sketch for explanation of the effects of control movement within an area concept substantially corresponding to figure 7a;
- **Figure 2b**: shows a sketch illustrating a speed vector of the cursors motion achieved by the control movement according to figure 2a;
- **Figure 3**: shows a sketch for explaining the concept of setting different speed values;
- **Figure 4**: shows a sketch for explaining the concept of generating different speed-orientations;
- **Figure 5**: shows a sketch for illustration of a ring-pointing-device version as it may be implemented into a PDA-housing or note book housing
- **Figure 6a**: shows a cross-section through a first embodiment of a touch pad area;
- **Figure 6b**: shows a cross-section through a second embodiment of a touch pad area;
- **Figure 6c**: shows a cross-section through a third embodiment of a touch pad area;
- **Figure 7a**: illustrates a polygon-version for separating an input area (preferably a touch pad area) into said first- and second mode areas;
- **Figure 7b**: illustrates a concentric-ring version for separating an input area (preferably a touch pad area) into said first- and second mode areas;
- **Figure 7c**: illustrates a concentric ellipsoid version for separating an input area (preferably a touch pad area) into said first- and second mode areas;
- **Figure 8**: shows a sketch for illustration of another ring-pointing-device version in which the said first zone doesn't exist including in its centre two buttons and a scrolling wheel arrangement as it may also be implemented into a PDA-housing, note book housing, keyboard or other housing structure;
- **Figure 9**: shows a sketch for illustration of a further version of ring-pointing-device including a trackball as it may be implemented into a PDA-housing or note book housing similar as the embodiment according to figure 5;
- **Figure 10**: shows a sketch for illustration of still another version of a ring-pointing-device including a capacitive grid contact sensor as it may be implemented into a PDA-housing or note book housing
- **Figure 11**: shows sketch for illustrating first and second areas for generating the cursor control data in accordance with area specific algorithms;
- **Figure 12a**: shows a sketch for explaining the effect of a transition from the central area (first mode area) into a ring area (second mode area) covering said first area;
- **Figure 12b**: shows a vector-diagram and associated vector functions for explaining the effect of a control movement illustrated in figure 12a;
- **Figure 13a**: show a sketch for explanation of the effects of control movement;
- **Figure 13b**: shows a sketch illustrating the cursor path achieved by the control movement according to figure 13a;
- **Figure 14**: shows a sketch illustrating another embodiment of an input system according to the present invention;
- **Figure 15**: shows a sketch illustrating an extension of the invention to a 3D environment.

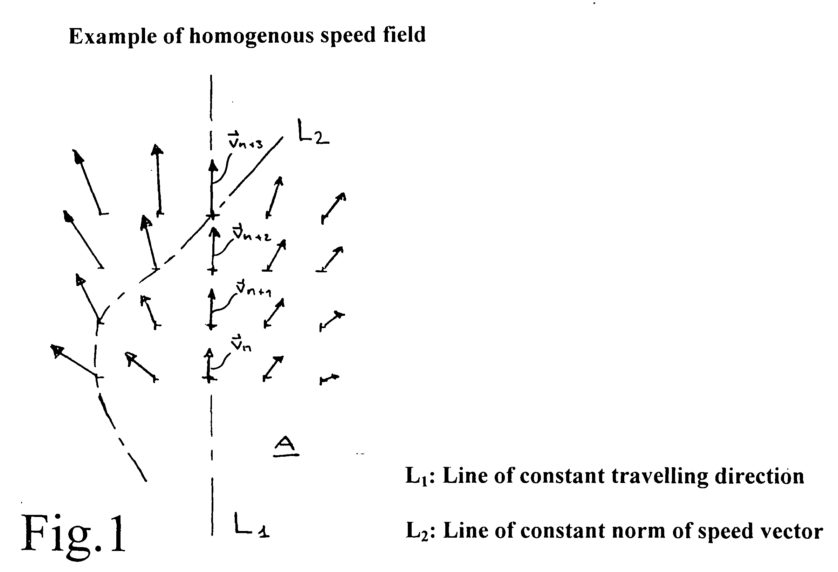

Figure 1 shows a continuous or homogenous vector field A which provides a particular speed vector, or speed vector control contribution in association to a location within said field.

In the present example, vectors vn, vn+1, vn+2, vn+3 have the same direction because they are located on a particular Line L1 which is a line of constant vector direction. Lines of constant speed vector norm, for example L2, can also be defined.

Two-dimensional vector fields can be defined on plane or on curved surfaces and allow to associate to each location point on the surface a speed vector. The selection by the user of one of the location on a surface can be interpreted as the wish of having the cursor moving on the screen with the corresponding speed vector.
On the basis of an input operation, for moving a cursor, positions within said vector field may be assumed, wherein
- by moving the location of the user input point from a first location n to an other location very next to location n, a slight change of the output speed vector will be achieved allowing the user to control precisely the trajectory of the cursor.
- By moving the input point along a line L1 an acceleration or a deceleration of the cursor movement may be achieved while keeping a constant movement direction.
- By moving the input point along a line L2 a steering effect may be achieved without changing the norm of the movement speed of the cursor.

Ideally the speed vector field should include vectors with every orientations and a sufficient range of speed making each point of the screen reachable in a short time and with accuracy.

Ideally two points of the speed vector field should not correspond to the same speed vector unless their location are included in a zone Z which is intentionally defined as zone of constant speed and/or constant direction. Such zones may be defined for important control directions like vertical or horizontal direction or like neutral zones where the speed is zero.

It is possible to construct the pointing device in a manner that the line L1 and/or L2 and/or the zone Z become obvious for the user, for example using colour codes or/and surface aspects or/and touch-feeling nuances. This may make the use of the pointing device more intuitive.

In case of a input point given for example by the finger of the user, it is also possible to guide the user input along the lines L1 or L2 using grooves on the surface of the pointing device.

Three-dimensional vector field may also be used in the same manner to control 2D or 3D movements.

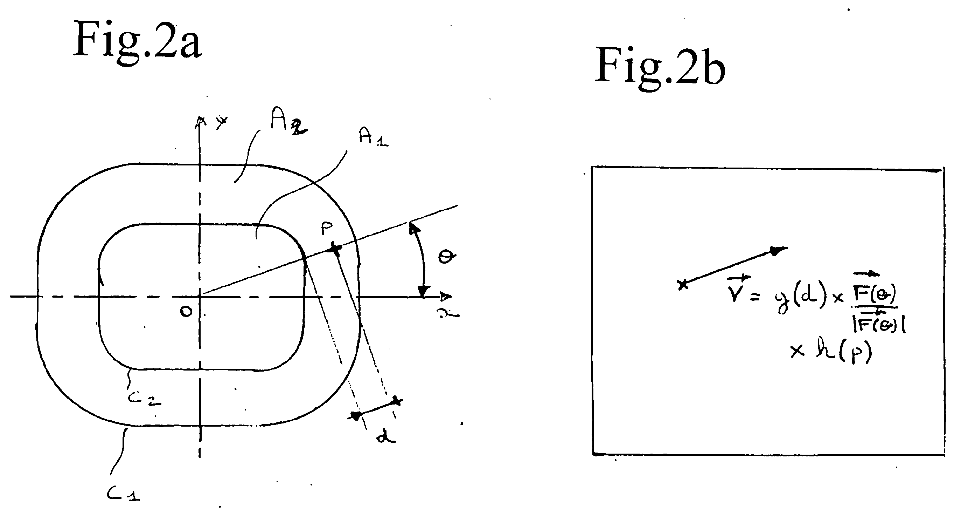

Figure 2a illustrates an example of definition of a speed vector field within a domain A2 delimited by the borderlines C1 and C2 wherein
- each point P of the domain A2 is defined with the coordinates (d,θ) wherein the parameter d is the distance of the point P to the line C1 and θ is the angle between the line (OP) and a reference axis x.
- The speed vector control contribution in association to the location P is mainly a function of the parameters d and θ..
- The direction of the speed vector is mainly function of the angle θ.
- The norm of the speed vector is mainly function of the distance d.
- A point located on the line C2 may be associated to a speed vector with the minimal norm, which is not necessarily zero.
- A point located on the line C1 may be associated to a speed vector with the maximal norm.

Figure 2b shows a screen cut-out illustrating the present speed vector, of a cursor moved along a screen resulting from the input action according to figure 2a. In this example, the vector is function of parameters set by the input action illustrated in figure 2a in point P. The speed vector is mainly function of the distance d and the angle θ defined in figure 2a but it may also depend on other parameters p, like for example, the input pressure on the pointing device and/or the speed of the input motion and/or the distance of the cursor to the border of the screen.

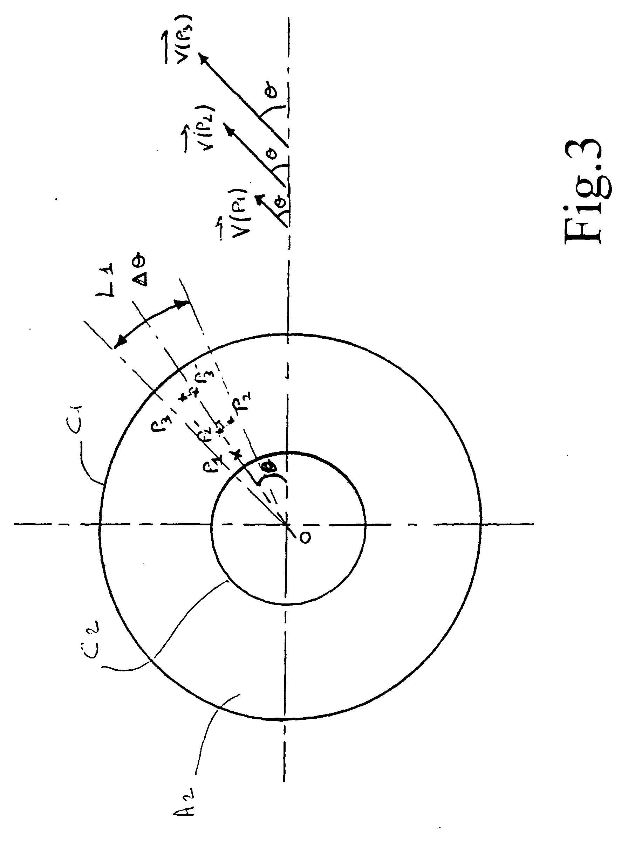

As illustrated in figure 3, the cursor speed vectors are preferably determined in a manner, wherein if it is detected that the user tries to follow a line of constant movement direction L1, the input point belonging to the same input motion like P2 and P3 will be associated to the nearest location P2' and P3' on the line L1 as long as they are laying within a small domain defined for example with a angle Δθ around the line L1.

This method is preferably applied if line of constant direction that the input motion of the user is mainly following corresponds to a particular speed vector direction.

Particular directions are for example the vertical direction, the horizontal direction, the 45° direction...

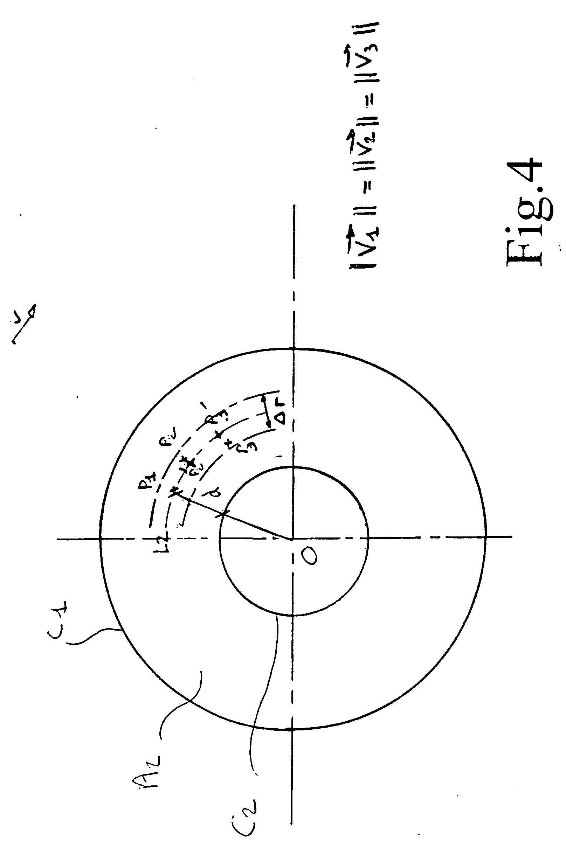

As illustrated in figure 4, the cursor speed vectors are preferably determined in a manner, wherein if it is detected that the user tries to follow a line of constant movement speed L2, the input point belonging to the same input motion like P2 and P3 will be associated to the nearest location P2' and P3' on the line L2 as long as they are laying within a small domain defined for example with a distance Δr around the line L2.

This is a similar concept as the one explained with reference to figure 3. It may be applied to suppress distances alterations of input positions in circumferential direction. In this example, the norms of the output speed vectors associated to the points P1, P2, P3 would be identical.

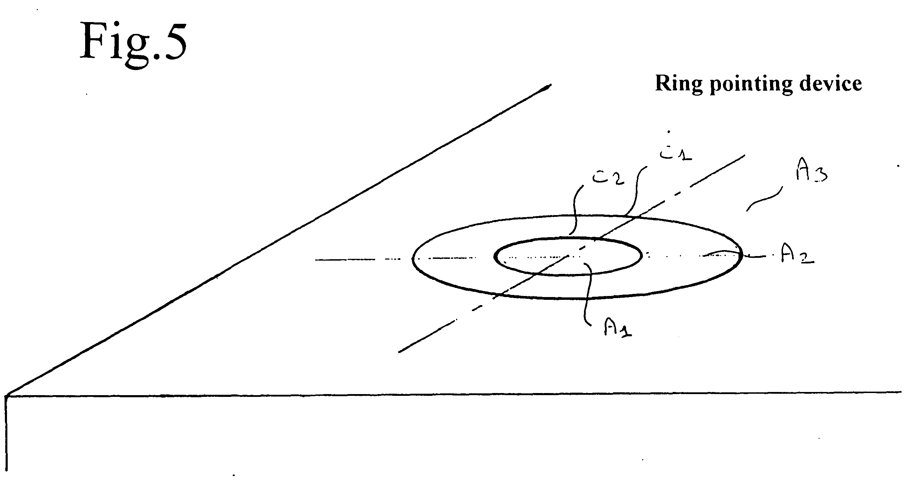

Figure 5 shows on basis of the particular domain A2 already defined in the figure 3 and 4 as carrying a vector speed field, a pointing device integrated in a computer housing. This particular kind of pointing device will be called Ring Pointing device.

Generally the invention may be integrated into a Laptop, a computer housing, a game pad, a personal digital assistant, a keyboard, a communication device, a cell phone, a video device or any multimedia or data processing device or component of a respective system.

The domain A2 can be defined as the steering-input area of the pointing device. In this particular case domain A2 has the form of a ring and is encompassing a central area A1. This central area A1 and the peripheral area A3 could be used for other common pointing device functions and could support functions like :
- stop the cursor movement
- actions equivalent to the click an double-click on mouse buttons.
- moving cursor on a other manner

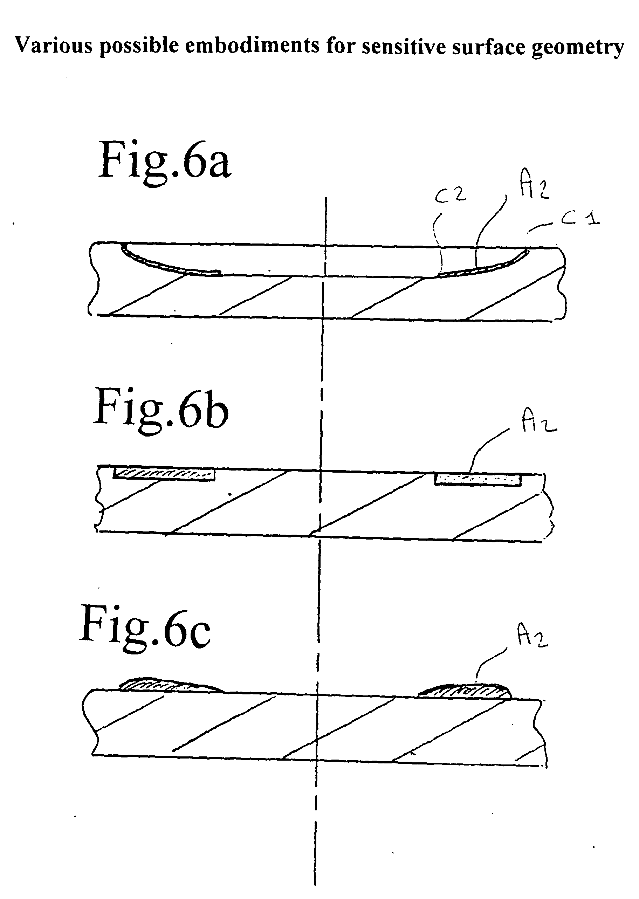

Figures 6a, 6b and 6c show possible cross-sections of the a ring pointing device as illustrated on figure 5 wherein the form of the surface may be concave, plane or convex. Preferably in this kind of device the input position will be the position of the user finger on the surface.
Particular surface shapes may be used to make the use of the device more intuitive by allowing the user to estimate his present finger position without looking at the device, just by touching the surface and recognizing its form.
For example, in figure 6a, while touching the surface A2, the user can know during an input motion that his finger is getting nearer of the line C1 when he feels that the surface slope get bigger. The direction of the slop gives him an indication of the angle θ as defined in figure 2a

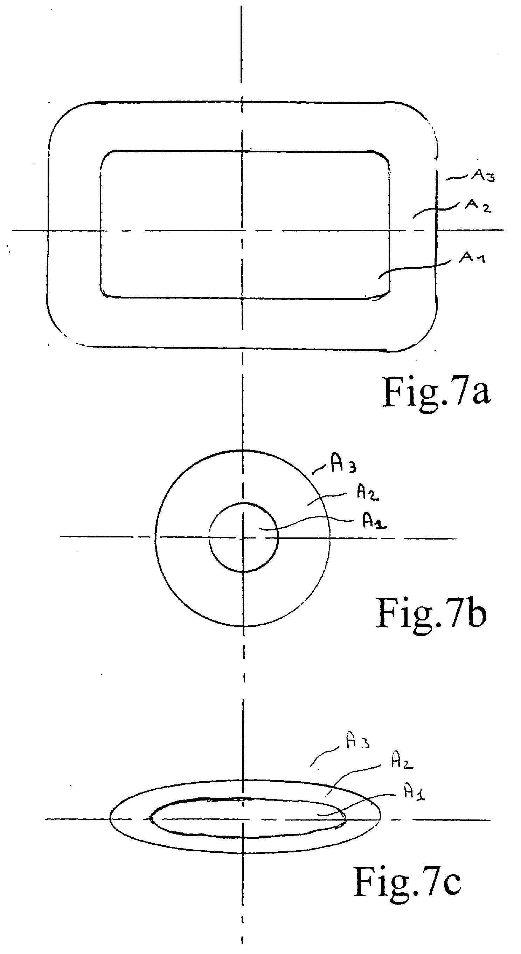

Figure 7a, 7b and 7c show top views of ring pointing device wherein this ring pointing device are variants of the ring pointing device defined in figure 5.

Figure 7a illustrates a polygon-version for separating an input area (preferably a touch pad area) into said steering area A1 and other areas A2 und A3;

Figure 7b illustrates a concentric-ring version for separating an input area (preferably a touch pad area) into said steering area A1 and other areas A2 und A3;

Figure 7c illustrates a concentric ellipsoid version for separating an input area (preferably a touch pad area) into said steering area A1 and other areas A2 und A3;

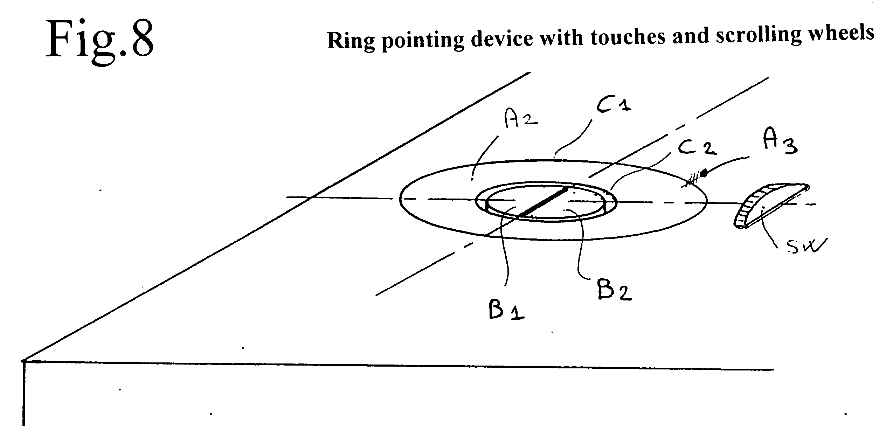

Figure 8 illustrates a variant of the ring pointing device shown in Figure 5 wherein the area A1 comprises a scrolling wheel SW and the area A3 comprises two buttons B1 and B2 that can be used as classical mouse buttons. In this manner all functions of the most spread pointing device, the computer mouse, can be realized : pointing, clicking, scrolling. On this way the invention can also been made compatible with most computer systems.

Lot of other variants of ring pointing device may be build by putting in the areas A1 and or A2 one or more of those elements:
- button
- scrolling wheel
- display
- touch pad
- touch screen

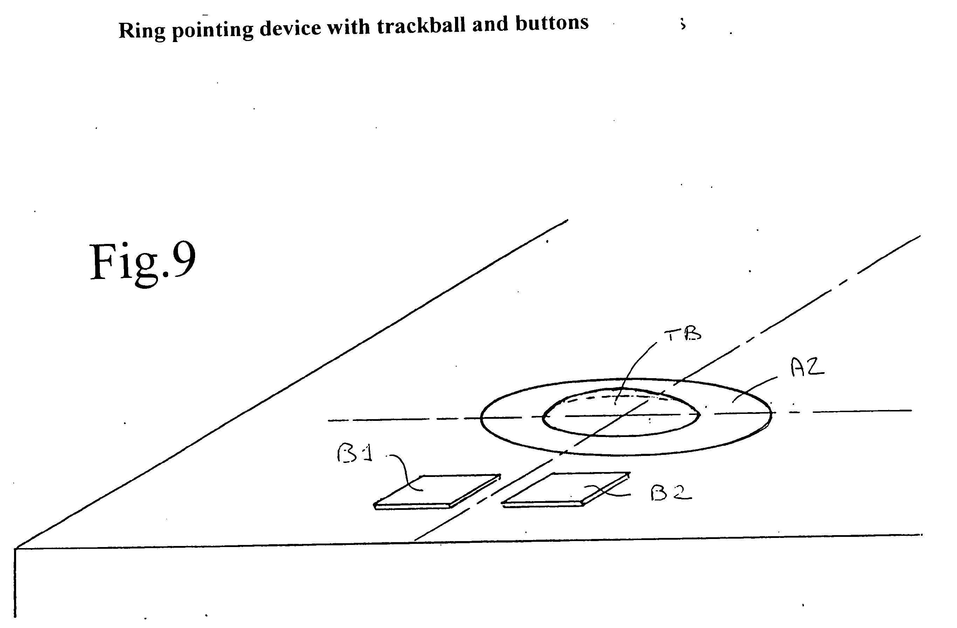

Figure 9 illustrates a variant of the ring pointing device shown in Figure 5 wherein the area A3 comprises a trackball TB and the area A1 comprises two buttons B1 and B2 that may be used at place of classical mouse buttons.

The pointing device is preferably so construed that in the same continuous input gesture the user has the possibility to use the functionalities of the steering area A2 and of the trackball TB on a way that the movement of the cursor on the monitor screen stays continuous or with continuous change of the vector speed.

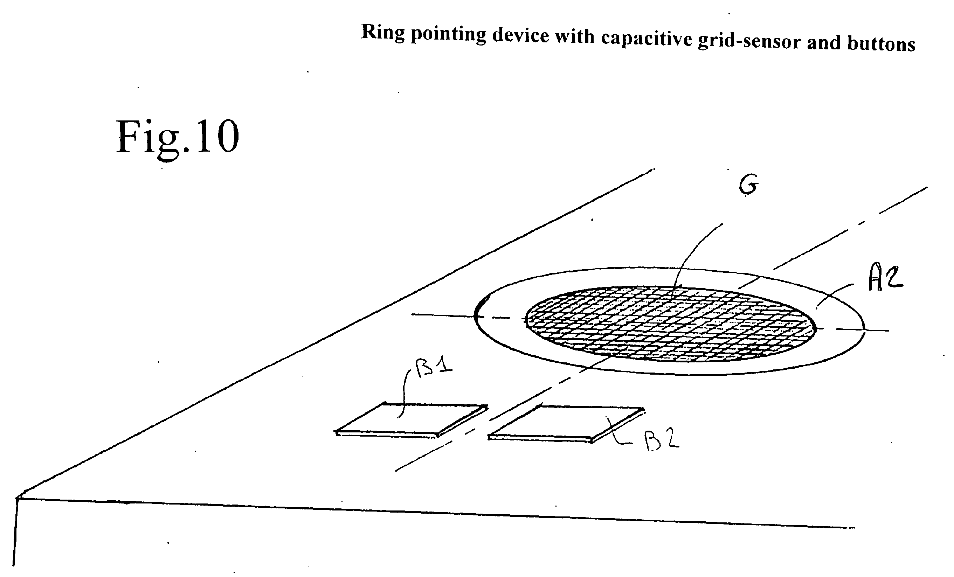

Figure 10 illustrates a variant of the ring pointing device shown in Figure 5 wherein the area A3 comprises a including a capacitive grid contact sensor G and the area A1 comprises two buttons B1 and B2 that may be used at place of classical mouse buttons.

The pointing device is preferably so construed that in the same continuous input gesture the user has the possibility to use the functionalities of the steering area A2 and of the touch pad TP on a way that the movement of the cursor on the monitor screen stays continuous or with continuous changement of the vector speed.

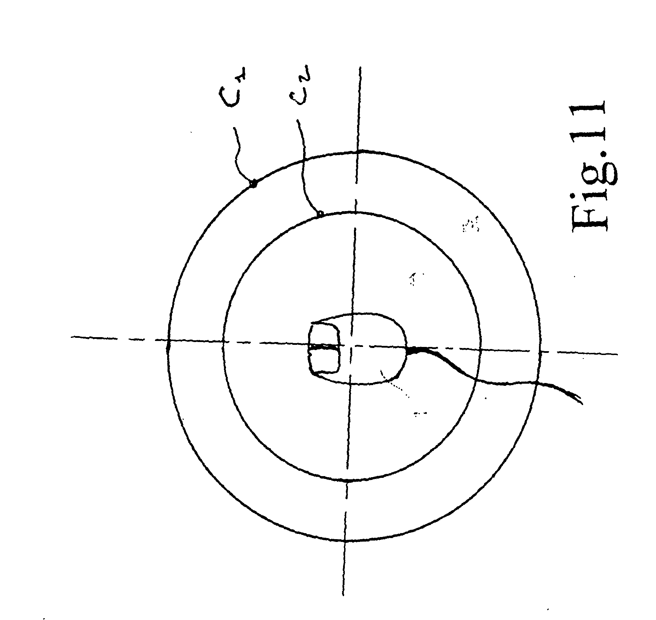

On Figure 11, a mouse device 1 may be moved on an area sufficient to receive a first mode area A and a second mode area B. According to the present embodiment, said first mode area A is a substantially circular area encompassed by an inner borderline C2.

Said second mode area is preferably a substantially ring shaped area encompassed between said inner borderline C2 and an outer borderline C1.

Said mouse device 1 and/or the computer system connected to said mouse device 1 is configured so as to provide different cursor control concepts depending on whether the pointing centre of the mouse device 1 is placed in the first or second mode area.

According to the present embodiment, the system is configured so that mouse movement within said first mode results into a cursor movement which is substantially proportional in distance and direction to the movement of the mouse centre.

If the mouse centre enters said second mode area, the movement of the cursor is preferably controlled on the basis of speed/direction approach in a manner where the cursor speed increases with the distance of the mouse speed from the inner centreline C2, while the direction of movement corresponds to the direction of a straight line passing the centre of said first area and the present position of the mouse centre.

Cursor speed may be increased by increasing the distance of the mouse centre from said borderline C2. Cursor speed may be lowered, by adhering said borderline C2. Preferably the system is configured so that on said borderline said cursor speed is zero, or assumes a given small value, while inside the area encompassed by said borderline (first mode area), the cursor speed is proportional to the movement of the mouse centre.

Changes of the position of the mouse centre within said second mode area will result into a change of the direction of the cursor movement. Preferably the system is configured such that - given the mouse centre is placed in said second mode area - the travelling orientation always corresponds substantially to the polar orientation in said ring zone (second mode area) in respect to the rings centre.

Basically the ring zone (second mode area performs as a steering area, which allows to control the direction of the cursors movement on the basis of the polar position of the mouse centre relative to a reference centre which preferably is determined to be the centre of the second mode area.

Said steering wheel area also allows speed control on the basis of an adjustment of the distance of the mouse centre from said borderline.

The above concept merely defines the main character of the cursor control approach according to the present invention. It is possible to provide further processing features, which may compensate, dampen, or suppress particular small range motions of the mouse centre if the mouse centre is located in the second mode (steering area). Further it is possible, to adapt the speed characteristic to the position of the cursor on the screen, in particular to decelerate the cursors speed if same approaches the screens margin.

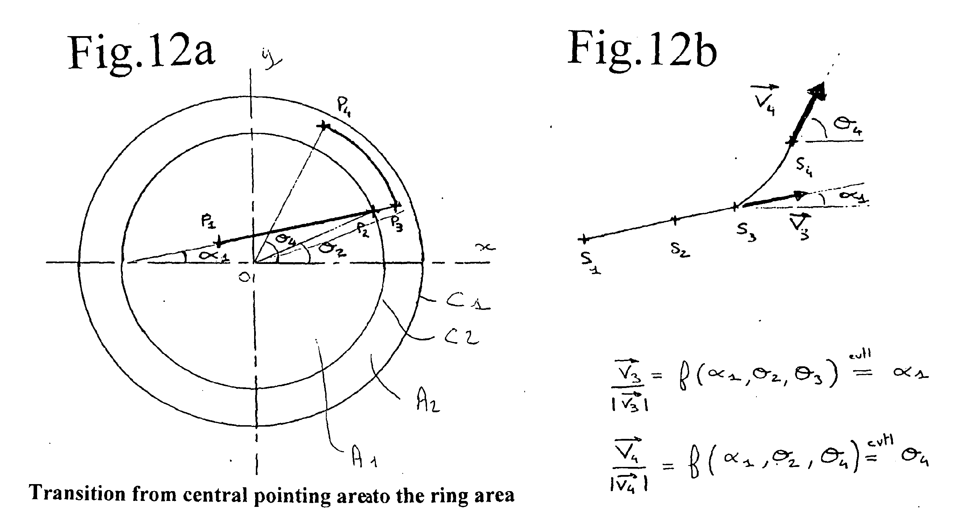

Figure 12a and 12b illustrate a concept aiming to keep the travelling speed vector of the cursor continuous. The goal is to have a continuous speed change when a user input gesture goes from the said proportional area into the said steering area of the pointing device. This method is preferably implemented in a manner wherein :
- the speed and the direction of the input movement while coming inside the steering area are measured and define a speed vector used as contribution for the determination of the cursor speed vector.
- this contribution is preferably be temporary and/or decreasing with the length of the trajectory made inside the steering area.
- the cursor speed just before and just after having the user input gesture crossing the border between the two areas and coming into the steering area is kept the same.

An example of input gesture is shown on figure 12a wherein the proportional area of the pointing device is A1 and the steering area is A2. C2 defines the borderline between those two areas and C1 is the outer borderline of the steering area A2. The input gesture taken in consideration is continuous and goes along the line (P1P2) with a constant speed, continues along the line (P2P3) and ends in P4. P2 is located on the border between the two areas A1 and A2.

Following angles are defined: α1 is the angle made by (P1P2) and the axis x, θ3 is defined as the angle made between the line (OP3) and the axis x, θ4 is defined as the angle made between the line (OP4) and the axis x.

Figure 12b shows the cursor movement on the computer screen resulting from the input gesture described in Figure 12a. The points S1, S2, S3 and S4 are on the cursor trajectory resulting from the input gesture going over respectively P1, P2, P3 and P4.
If a previous part of the present input gesture went over the proportional area A1 and as long as the input location is located within the steering area A2, two vector speed contributions are considered:
- the speed vector of the cursor while the input gesture was nearing P2 or moving away from P2.
- the speed vector contribution depending on the present input location as defined in figures 2a and 2b.

A method to determine the cursor speed is preferably implemented wherein:
- if the point P1, P2 and P3 are on the same line, the movement direction of the cursor on the screen in S3 will be the same as in S2 for example
- At the point P4 further on the input trajectory after a predetermined time and upon a predefined distance from the line (P1P2), the cursor speed vector depends only of the contribution defined in figure 2a and 2b.
- If the input gesture comes back to P3 after being in point P4 the cursor speed vector depends only of the contribution defined in figure 2a and 2b.

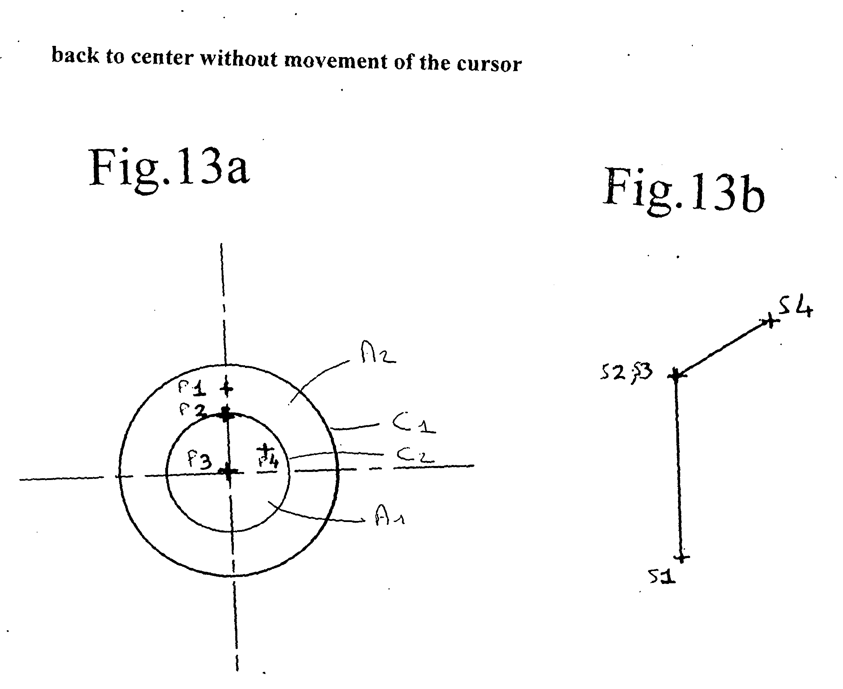

Figure 13a and 13b illustrate the concept of stopping the movement of the cursor from the moment when the input trajectory is leaving the steering area A2 to the moment when it's coming to the centre of proportional area A1.

Figure 13a shows an example of input trajectory going over the points P1, P2, P3 and P4. P1 is on the steering area A2 of the pointing device, P3 and P4 are on the said proportional area A1 and P2 is on the borderline C1 between A1 and A2.
Figure 13b shows the trajectory of the cursor on the screen related to the input trajectory shown on Figure 13a. The points S1, S2, S3 and S4 are on the cursor trajectory resulting from the input gesture going over P1, P2, P3 and P4.
A method to determine the cursor trajectory is preferably implemented wherein:
- if the input trajectory is leaving the steering area A2, like in this example in P2, the cursor stops to move until the input trajectory comes near the centre of the area A1, in this example in P3. Therefore the point S2 and S3 are identical.
- if the input trajectory is going to a point P4 of the proportional area A1 after having left its centre, the cursor moves again on a proportional way and goes to an other point S4 of the screen.

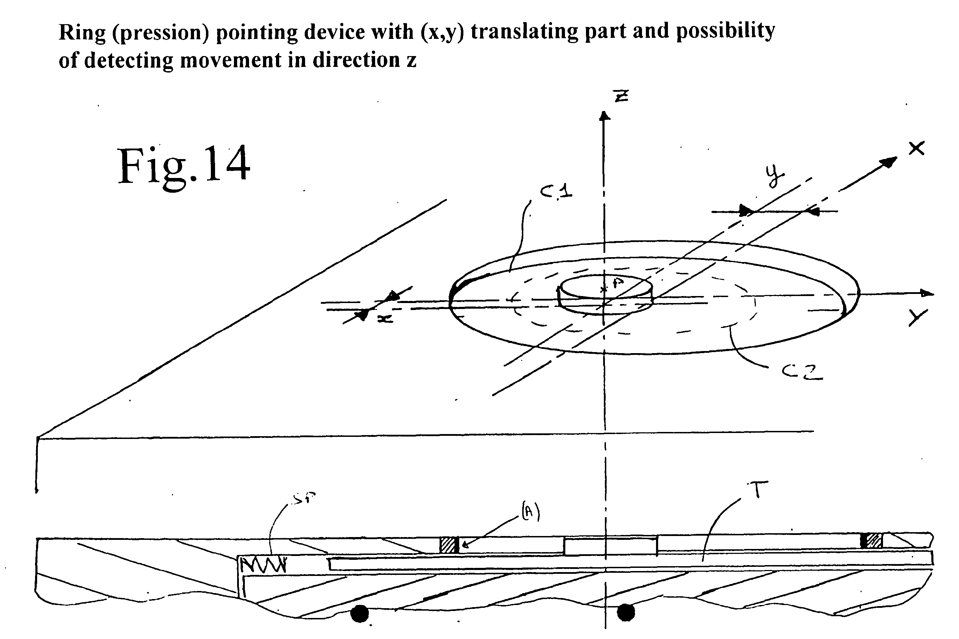

Figure 14 illustrates a pointing device encompassed in a computer housing or a laptop comprising a translating piece T that the user can move within a defined area inside the limit C1. The device comprises sensors that determine the position (x,y) of the centre P of the translating piece T.

This pointing device will preferably be build in a way that:
- If the location of the point P is inside the proportional area limited by C2, the cursor movement will be proportional to the movement of P.
- If the location of the point P is in the steering area limited by C1 and C2, the pointing device will shift into a steering mode as described in Figures 2a and 2b.
- if the pointing device centre P is located within the steering area, a force pushes the piece T with a strength proportional to the distance to the border C2 in direction of the centre of the pointing device. This can be realized with a spring system SP as shown on figure 14.
- The resistance force to the displacement of the translating piece T inside the proportional area delimited with C2 is low and almost constant.
- A system prevent the translating piece T to move alone, without an action of the user, so that the cursor doesn't move too.
If the translating piece T reaches the outer borderline C1 of the steering area, the translation force given by the user on the border of the pointing device may be measured, for example with help of piezo-elements. An other speed vector contribution depending on this translation force can be defined.

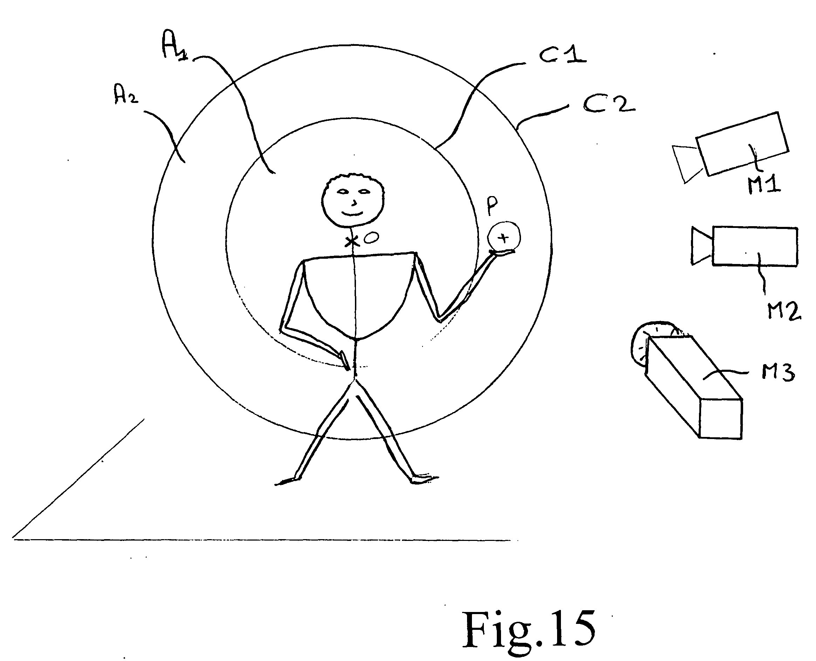

Figure 15 illustrates the extension of the concept of the invention to a 3D environment. The 3D pointing device will preferably measure the position of a input point P moved by the user and located for example in his hand to a reference point O that may be a point of the body of the user.

Two surfaces C1 and C2 define two volumes A1 and A2 wherein:
- If the input point is located inside the volume A1, the movement of the cursor in the 3D environment will be proportional to the movement of the input point.
- If the input point is located inside the volume A2, the movement of the cursor in the 3D environment will be defined with help of a 3D speed vector field giving a vector speed contribution to the movement of the cursor similarly as defined in Figures 1, 2a and 2b for 2D environment.

The methods explained in conjunction with Figures 12 and 13 are extended to a 3D environment.

The measurement of the location of the input point P in the space may be calculate on basis of inputs coming from at least 3 sensors M1, M2 and M3. For example video camera can be used.

In the above context, the expression "cursor" covers in particular those graphic symbols, signs and other indications which may be controlled by input actions applied to structures such as mouse- or touch-pad devices. The method according to the present invention as well as the system for carrying out said method may be also used for modifying view-point position or object movement in 3D applications or for other control actions in virtual space.

## Claims

1. A method for generating control data appropriate for moving and positioning a cursor within a display area such as a computer screen or projection surface in response to a users control action, wherein said control data are generated so as to move and position said cursor in accordance with a travelling vector, wherein speed and orientation of said travelling vector are determined in relation to a position selected within a control area, while said selection of said position being achieved by said control action of the user, and wherein further said control area performs as a selection system for providing speed and/or direction parameters for determining said travelling vector, in association to selectable positions within said control area.

2. Method according to claim 1, wherein said control area is a two-dimensional area.

3. Method according to claim 1, wherein said control area is a three dimensional area.

4. Method according to at least one of claims 1 to 3, wherein the orientation of said vector is determined in relation to the elected position relative to a reference center.

5. Method according to at least one of claims 1 to 4, wherein the travelling speed of the cursor is determined in relation to the elected position and a speed value assigned to this elected position.

6. Method according to at least one of claims 1 to 5, wherein the speed value assigned to the elected position is dynamically adapted in accordance with predetermined filter, dampening or other calculation modes.

7. Method according to at least one of claims 1 to 6, wherein the speed value assigned to the elected position is determined with reference to a speed vector array.

8. Method according to at least one of claims 1 to 7, wherein the speed value is calculated in relation to the distance of the selected pointing position from a reference centre or in relation to the elected position relative to a reference system.

9. Method according to at least one of claims 1 to 8, wherein the speed and/or orientation of the cursors movement is calculated in consideration of the history or history parameters of the users control movement.

10. A method for generation of control data for controlling a cursor in accordance with an operators control movement, in particular according to at least one of claims 1 to 9 in a manner wherein
- said control data are generated in accordance with a first conversion function which allows controlling said cursor substantially proportional to said operators control motion as long as said control motion complies with a first conversion criteria, and
- said control data are generated in accordance with a second conversion function which allows to control the movement of said cursor in connection with direction/speed process when said control motion complies with a second conversion criteria.

11. Method according to claim 10, wherein said first conversion criteria is whether the control movement is inputted within a given first-mode-area.

12. Method according to claim 11, wherein said first-mode area corresponds to the central area within a touch-pad, or mouse movement area.

13. Method according to at least one of claims 10 to 12, wherein said first conversion criteria is whether the control movement does not exceed a given range around a starting point or a reference point.

14. Method according to at least one of claims 1 to 13, wherein said first conversion criteria is whether the control movement is inputted under a particular switching state.

15. Method according to at least one of claims 1 to 14, wherein said second conversion criteria corresponds to the inversion of said first conversion criteria.

16. Method according to at least one of claims 1 to 17, wherein performance of said second conversion criteria is considered on the basis of a finger-tip pressure threshold value comparison.

17. Method according to at least one of claims 1 to 16, wherein the direction/movement-speed process is determined such that the direction of the movement is determined so as to substantially conform to the direction of a vector determined by the present input position in respect to a center of orientation.

18. Method according to at least one of claims 1 to 17, wherein the speed of the movement is determined so that the movement speed of the cursor corresponds to the distance from said center of orientation.

19. Method according to at least one of claims 1 to 18, wherein the speed of the movement of the cursor is determined so as to correspond to the distance from a borderline around said first-mode-area.

20. Method according to at least one of claims 1 to 19, wherein the speed of the movement of the cursor is determined with reference to a speed vector field.

21. Input subsystem forming part of a computer system for enabling the generation of cursor positioning control data, said device comprising
- detection means for detecting a users control movement,
- calculation means for calculating said control data, said calculation means being configured so as to generate said path control data in accordance with the method set fort in at least one of claims 1 to 20.

22. Input subsystem according to claim 21, wherein said detection means are construed as a mouse- or touch-pad pointing device.
